(19) Europäisches Patentamt

European Patent Office

Office européen des brevets

(11) EP 1 426 804 A2

(12) EUROPEAN PATENT APPLICATION

(43) Date of publication:
09.06.2004 Bulletin 2004/24

(51) Int Cl.⁷: **G02B 6/44**, B01J 20/00,
C01B 3/00

(21) Application number: 03027759.4

(22) Date of filing: 03.12.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: 04.12.2002 US 309020

(71) Applicant: **ALCATEL**
75008 Paris (FR)

(72) Inventors:
• **Neogi, Swati**
GA 30117 Carrollton (US)

• **Risch, Brain G.**
N.C. 28203 Hickory (US)
• **Coat, Pierre**
N.C. 28203 Charlotte (US)

(74) Representative:
**Dreiss, Fuhlendorf, Steimle & Becker
Patentanwälte,
Postfach 10 37 62
70032 Stuttgart (DE)**

(54) **Hydrogen-absorbing composition and optical fiber cables incorporating same**

(57)   An optical fiber telecommunication cable including a sheath and at least one optical fiber is provided. The sheath encloses at least one optical fiber, and a hydrogen absorbing composition is disposed between the sheath and the at least one optical fiber. The hydrogen absorbing composition includes a synthetic oil, a thixotropic agent, an antioxidant system and a carbon nanostructure component, wherein the carbon nanostructure component is hydrogen absorbent.

FIG. 1

**Description**

**BACKGROUND OF THE INVENTION**

1. Field of the Invention

The present invention relates to optical fibers and more specifically optical fibers that are surrounded by a hydrogen absorbing composition containing a carbon nanostructure. Particularly, this composition prevents the interaction of hydrogen with the optical fibers.

2. Description of Related Art

In the telecommunications .industry, optical fibers are silica (i.e., glass) fiber or filament of exceptionally high purity and specific properties (e.g., refractive index) that transmit data in the form of light impulses. Optical fiber cables have been found to have a number of applications as they are capable of transmitting signals over great distances, at high speeds and with relatively low signal loss as compared to standard wire or cable networks. Some of the technologies utilizing optical fiber cables include: medicine, aviation, communications, automotive, control applications, etc.

Depending on the particular technology for which the cables are employed, the optical fibers are protected from destructive factors, such as weather, moisture, temperature extremes and physical damage (i.e., stress, strain, impact). Thus, generally, optical fibers are arranged in any number of ways and disposed in a sheath system which surrounds and protects the fibers. Naturally, the fibers may be placed in a buffer tube which functions as an intermediary between the optical fibers and the sheath. For example, the fibers can be centrally located within a centrally located single buffer tube containing one or more optical fibers; the cables may contain a plurality of buffer tubes disposed therein and stranded in any manner, such as helical or alternating helical arrangement; the cables may contain a central strength member; or the cables include slotted cores in which a plurality of optical fibers reside.

Regardless of the configuration of the optical fibers, within the sheath, one of the deficiencies recognized in the cables to date is the interaction of hydrogen with the optical fibers which can lead to increased attenuation in the optical fibers. Although not wanting to be bound by any particular theory, it is believed that hydrogen is formed either during the manufacturing of the thermoplastic cable, or through the chemical reaction of traces of water, in liquid or gaseous state, which can penetrate into the cable itself. Moreover, hydrogen located outside the cable can reach the optical fibers of a cable through diffusion. In this regard, it is known in the art that when gaseous hydrogen comes into contact with an optical fiber, the transmitted signals may become attenuated. This effect can be irreversible and may compromise the transmission capacity of the cable.

To extend the life of fiber optic cables, a number of hydrogen-absorbing compositions of matter have been proposed in the prior art. Traditionally, these compositions have been utilized as a filling material which is introduced between the optical fiber strands and the sheath. These hydrogen-absorbing filling compositions, sometimes referred to as waterblocking materials, are semi-solid substances that comprises a thickening or gelling agent in a liquid carrier. For example, U.S. Patent No. 6,106,939 discloses an optical fiber cable including a filling material, wherein the filling material includes 80-95 percent by weight of synthetic oil(s), 5-20 weight percent of diblock copolymers and less than 1.5 percent by weight of inorganic filler.

U.S. Patent No. 6,085,009 discloses a gel which is water blocking agent for an optical fiber cable buffer tube. The gel includes a polyolefin oil, wherein less than 3 weight percent of the polyolefin species in the oil has a molecular weight below 2000, a thixotropic agent and a thermal oxidation stabilizer. This patent is hereby incorporated by reference in its entirety.

The most common countermeasure used in combating hydrogen formation has been through the inclusion of either palladium powder, metal hydrides or metal exchanged zeolites in the fiber optic cable filling gels.

In this regard, U.S. Patent No. 5,455,881 describes an optical fiber telecommunication cable, wherein a portion of the internal volume includes a hydrogen-absorbing composition. The composition includes a hydrocarbon compound and a catalyst selected from a group including transition metals, salts and organic and inorganic complexes of transition metals, characterized in that the hydrocarbon group includes at least 90% of a substantially homogeneous silicon-free hydrocarbon which is not obtained by polymerization of monomers including conjugated dienes.

U.S. Patent No. 4,725,123 describes a hydrogen absorbing mixture for protecting optical cables. The mixture includes at least one oxide selected from among oxides of titanium, vanadium, chromium, manganese, etc. Another basic component of the mixture is a catalyst selected from among transition metals such as palladium powder and complexes thereof. This mixture is incorporated into a cable filler, such as a silicon grease, and introduced into the cable as a filler material.

U.S. Patent No. 4,715,678 discloses a "hydrogen trapping" material disposed in a fiber optic cable in conjunction with at least one of a waterblocking and a water-absorbing substance. The hydrogen trapping material includes activated manganese or a finely divided palladium.

One of the disadvantages associated with the prior art filling gels/water-blocking materials is their inability to absorb hydrogen effectively. Particularly, physically absorbent systems have proved ineffective to block hydrogen diffusion through the optical fibers due to the reversible hydrogen-to-absorbent bond and the inability of the absorbent to stably bond the hydrogen under temperature conditions to which the cables may be exposed (e.g., submarine cables).

Another disadvantage is the high cost of the hydrogen-absorbent components utilized in the prior art filling gels. Particularly, the inclusion of palladium powder has been found to be expensive. The alternative means of hydrogen absorption by including metal hydrides and metal exchanged zeolites has likewise been found to be expensive and subject to limited effectiveness after exposure to water.

## SUMMARY OF THE INVENTION

In accordance with the present invention, an innovative optical fiber telecommunication cable with a hydrogen absorbing gel composition disposed therein is provided. The invention finds particular applicability in the telecommunication industry, wherein the cables are exposed to a wide range of environmental conditions.

To meet the requirements of the telecommunication cable industry and to overcome the disadvantages of the related art, it is an object of this invention to provide a hydrogen absorbing gel composition having improved absorption capacity. The gel composition is to be utilized in fiber optic cable applications, wherein the optical fibers are adequately protected from possible attenuation of the signal transmitted therethrough.

Another object of this invention is to provide a hydrogen absorbing gel having a carbon nanostructure component which is less expensive than the hydrogen-absorbing components of the prior art (e.g., palladium powder, metal hydride and metal exchanged zeolites).

Other objects and aspects of the present invention will become apparent to one skilled in the art upon review of the specification and claims appended hereto.

In accordance with a first aspect of the invention an optical fiber telecommunication cable is provided. The cable includes:

(a) a sheath enclosing at least one optical fiber; and

(b) a hydrogen absorbing composition disposed between the sheath and the at least one optical fiber. The hydrogen absorbing composition includes a synthetic oil, a thixotropic agent, a antioxidant system, and a carbon nanostructure component, wherein the carbon nanostructure component is capable of absorbing hydrogen.

According to another aspect of the invention, an optical fiber telecommunication cable is provided. The cable includes:

(a) a sheath enclosing at least one buffer tube made from a polyolefin or polyester material;

(b) a bundle of optical fibers disposed in the at least one buffer tube; and

(c) a hydrogen absorbing composition disposed in the buffer tube between the bundle of optical fibers and the buffer tube. The hydrogen absorbing composition includes a synthetic oil, a thixotropic agent, antioxidants and a carbon nanostructure component, wherein the carbon nanostructure component is capable of absorbing hydrogen.

According to yet another aspect of the invention, a hydrogen absorbing gel composition is provided. The composition includes:

a synthetic oil, a thixotropic agent, an antioxidant system, and at least one hydrogen absorbing component, wherein the hydrogen absorbing component has a carbon nanostructure.

## BRIEF DESCRIPTION OF THE DRAWINGS

The objects and advantages of the invention will become apparent from the following detailed description of the exemplary embodiments thereof in connection with the accompanying drawings, where like reference numerals denote same features, and in which:

Fig. 1 is a perspective view of an optical cable incorporating a hydrogen absorbent composition therein;

Fig. 2 is a perspective view of an optical cable having a number of bundles of optical fibers disposed therein, in conjunction with a hydrogen absorbing gel composition; and

Fig. 3 is a cross-sectional view of an optical cable illustrating stranded optical fibers within buffer tubes and a hydrogen absorbing gel composition.

## DETAILED DESCRIPTION OF THE INVENTION

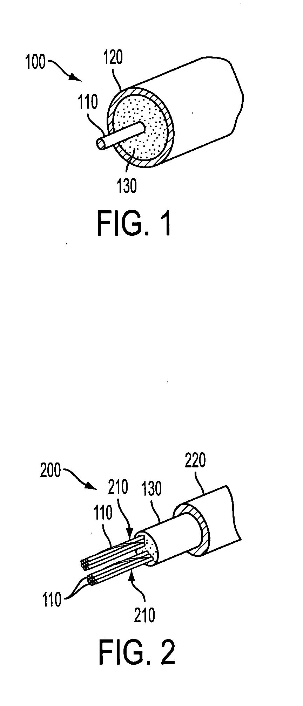

The invention will be described with reference to the accompanying Figs.1-3. It will be understood by those skilled in the art that these figures are intended to illustrate various aspects of the invention and are in no way limiting thereto.

Fig. 1 illustrates a fiber optic cable, in accordance with an exemplary embodiment of the invention. Cable 100 has an optical fiber/filament 110 disposed within sheath/outer protective layer 120. Disposed therebetween is a hydrogen absorbing composition 130 in accordance with the invention. The term "hydrogen absorbing composition" as used herein refers to a filling material to be employed in a fiber optic cable system and it will be understood to mean a water-blocking material, preferably in a gel form.

Hydrogen absorbing composition 130 (sometimes referred to as simply, "composition 130") must meet certain rheological characteristics which renders composition 130 suitable for use in cable 100. As will be recognized by those skilled in the art, the necessary criteria includes viscosity, material compatibility (i.e. with the sheath 120), oil separation, cable drip performance, thermooxidative stability, etc. For example, if the drip performance of composition 130 at elevated temperatures is poor, the composition can flow out of the cable and into splice enclosures or undesired locations.

In general, composition 130 of the present invention is a thixotropic material, such as a stable gel-like substance. Optical fiber 110, surrounded by the gel-like substance, is loosely accommodated in sheath 120. Thus, composition 130 permits a degree of movement between optical fiber 110 and sheath 120 in order to prevent an undue strain being placed on fiber 110 when bent or flexed. As will be readily recognized by those skilled in the art composition 130 is a thixotropic material which has the ability to flow when subjected to shearing forces and to return to the gel form when at rest.

With reference to Fig. 2, a number of bundles 210 are disposed in sheath/outer protective layer 220 contain optical fibers 110. Naturally, bundles 210 are formed by arranging optical fibers 110 in any number of ways. Some of the configurations include a simple linear arrangement where the fibers are disposed in close proximity to one another. In a further arrangement, the fibers may be stranded or intertwined in any manner such as helical or alternating helical arrangement, within each respective bundle 210. The hydrogen absorbing composition 130, is disposed between the bundles and the sheath/outer protective layer 220. Further, composition 130 may be utilized to fill any openings that may exist between optical fibers 110 within one bundle 210.

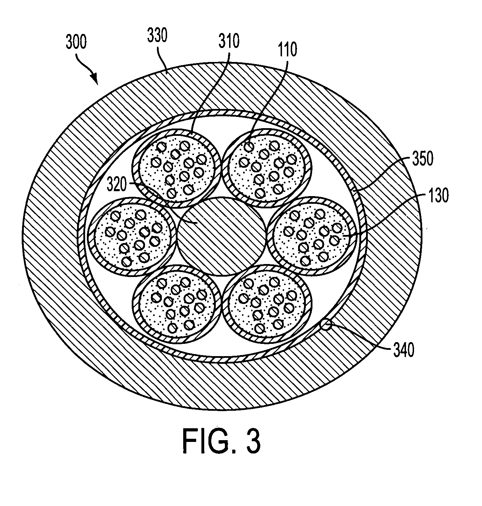

Fig. 3 illustrates a typical stranded optical fiber cable 300 having a core comprised of buffer tubes 310, each of which houses optical fibers, stranded about a central strength member 320. A sheath/outer protective layer 330 is disposed over the core region on the exterior of the buffer tubes. A ripcord 340 is provided near the interface of wrap 350 and outer jacket 330. Hydrogen absorbing composition 130 is disposed within the buffer tubes 310, and may also be disposed within the core, outside of the buffer tubes.

Preferably, buffer tubes 310 are low cost polyolefin materials, such polyethylene, polypropylene, polybutylene, polyolefin copolymers, polyolefin terpolymers, and mixtures thereof. As disclosed in U.S. Pat. No. 5,574,816, polypropylene-polyethylene copolymers or compounds, which are less expensive than polybutyrene terephthalate (PBT), polycarbonate or Nylon 12 can be used to make buffer tubes for optical fiber cables by incorporating nucleating agents in the polypropylene-polyethylene copolymer melt prior to extrusion of a buffer tube or by incorporating filler materials with the copolymer during the extrusion of a buffer tube.

While the polyolefin materials utilized in buffer tubes 310 are inexpensive, such materials may be incompatible with some water-blocking filling materials due to the polymer/solvent interactions that induce swelling of the polymer by the filling material. This deleterious effect on cable 300 has been addressed as described in both U.S. Patent No. 6,085,009, and the present invention.

In accordance with one embodiment of the present invention, hydrogen absorbing composition 130 includes one or more synthetic oils, a thixotropic or pseudoplasticity agent, a thermal oxidative stabilizer, and a hydrogen absorbing component.

The synthetic oil, which forms the base of composition 130 may, for example, include polyolefins, polyalphaolefins, polyglycols, polybutenes, polyisobutylenes, polypropenes, poly-n-decene, poly-n-pentene, poly-n-hexene, poly-n-octene, fractionated mineral oil, silicone oils, and blends thereof. Ideally, the average molecular weight of the synthetic oil is greater than about 350 and preferably greater than about 2000. Commercially suitable polyalphaolefins include HITEC 174 oil available from the Ethyl Corporation or SHF 404 or SHF 1003 oil available from the ExxonMobil corporation.

A second component, namely, a thixotropic/pseudoplasticity agent is added to the synthetic oil component to provide the rheological characteristics discussed above. Particularly, the thixotropic agent or modifier thickens the oil constituent so that oil separation is reduced. Oil separation or syneresis is a property of a gel-like composition which describes the tendency to bleed oil during the lifetime of the composition. Naturally, selection of a proper thixotropic modifier requires the manufacturer to strike a balance between competing properties imparted to the ultimate composition 130. For example, addition of an inorganic thixotropy modifier increases the material's yield stress and viscosity. Addition of a polymeric additive may impart different rheological properties to the material. A proper mixture of base oils, inorganic and/or polymeric modifiers must be formulated such that oil separation and rheological properties are acceptable.

Those skilled in the art will recognize that the thixotropic agent/modifier may be either organic, inorganic, or a combination thereof. Therefore, the thixotropic agent can be fumed silica, a block copolymer, or a combination of both. Other relatively high viscosity semi-liquids, sometimes referred to as semisolids, or rubbers may be appropriate. Block copolymers and semi-liquid rubbers, referred to collectively as rubber polymers, can be employed.

Among the block copolymers that can be used in waterblocking compositions of the invention are styrene-rubber and styrene-rubber-styrene block copolymers having a styrene/rubber ratio between approximately 0.1 and 0.8 and a molecular weight, as indicated by viscosity in toluene at 25°C, of from about 100 centipoise (cps) in a 20 percent by weight rubber solution to about 2000 cps in a 15 percent by weight rubber solution.

Exemplary diblock copolymers include: (a) a styrene-ethylene propylene block copolymer (SEP), unplasticized, having a styrene/rubber ratio of about 0.59, a specific gravity of about 0.93, a break strength per ASTM D-412 of 300 psi, and being available from the Shell Chemical Company of Houston, Texas, under the trade designation Kraton G 1701; (b) a styrene-ethylene propylene block copolymer having a sytrene to rubber ratio of about 0.39 and available from the Shell Chemical Company under the designation G1702; and (c) a diblock copolymer of ethylene and propylene available from the Shell Chemical Company under the designation G1750. Another copolymer which may be used is Kraton 1726 copolymer, which is a mixture of 30% styrene-ethylene butylene-styrene triblock copolymer (SEBS) and 70% styrene-ethylene butylene diblock copolymer (SEB). A preferred embodiment uses Kraton G1701 block copolymer.

The third component added to the synthetic oil is an oxidant system. Particularly, the oxidant system is any material which is capable of functioning as a thermal oxidation stabilizer. Typical thermal oxidation stabilizers that may be employed include hindered phenolics, hindered amines, thiostabilizers such as DSTDP, and/or BHT. Typically these antioxidants are incorporated in quantities less than 1% with hindered phenolics and amines requiring only a fraction of a percent to achieve suitable oxidative stability.

A feature of the present invention, is that one or more additional components are added to the gel composition, thereby rendering composition 130 hydrogen absorbent. These additional components may act independently, each being optimized for different potential conditions, or they may work synergistically. Preferably, one or more of the additional components has a carbon nonostructure capable of absorbing hydrogen, as discussed below. Nonlimiting examples of preferred carbon nanostructures are those selected from carbon nanotubes, carbon fibrils, carbon nanoshells, and carbon nanofibers. Typically, the nanostructure will be substantially graphitic, and in the case of carbon nanofibers, the interstices will be the distance between graphitic platelets of about 0.335 nm. It is to be understood that the terms "carbon filaments," "carbon whiskers," "carbon nanofibers," and "carbon fibrils," are sometimes used interchangeably by those having ordinary skill in the art and any of the structures denoted.

Although not wishing to be bound by any particular theory, it is believed that the nanostructures of the present invention store hydrogen by chemisorbing molecular hydrogen in the interstices of the nanostructure. That is, by a non-dissociative mechanism, as opposed to a dissociative chemisorption method, like palladium hydrogen absorption wherein the hydrogen molecule is split and atomic hydrogen is held by palladium. Accordingly, as part of composition 130 the carbon nanostructure, in the form of fibrils or nanotubes, etc., absorbs hydrogen which is deleterious to optical fibers 110.

For purposes of the present invention, carbon fibrils, which themselves are sometimes referred to as carbon nanotubes, can be of the type described in U.S. Pat. Nos. 4,663,230 and 5,165,909, both of which are incorporated herein by reference. Carbon fibrils are reported to be essentially cylindrical discrete structures characterized by a substantially constant diameter between about 3.5 nm and 70 nm, a length greater than about 5, preferably 100 times the diameter, an outer region of multiple essentially continuous layers of ordered carbon atoms having c-axis that are substantially perpendicular to the cylindrical axis of the fibril, and a distinct inner core region. Each of the layers and core are reported in the above patents to be disposed substantially concentrically about the cylindrical axis of the fibril. The carbon fibrils are catalytically grown by the thermal decomposition of a gaseous carbon-containing compound.

Carbon nanotubes, other than those which are sometimes also referred to as carbon fibrils, will typically be of the fullerene type. Such structures are described in an article by M. S. Dresselhaus et al entitled Fullerenes, on pages 2087-2092 in Journal of Materials Research., Vol. 8, No. 8, August 1993, which article is incorporated herein by reference. Fullerenes are $C_n$ cage molecules built from a collection of hexagonal and pentagonal faces. The $C_{60}$ fullerenes are typically referred to as "buckminster fullerenes" or simply "buckyballs" $C_{60}$-derived tubules can be defined, in simplest terms by bisecting a $C_{60}$ molecule at the equator and joining the two resulting hemispheres with a cylindrical tube one monolayer thick and with the same diameter as $C_{60}$. Carbon nanotubes can also be defined as substantially hollow structures comprised of substantially parallel graphite layers aligned at distances of about 0.335 nm to 0.67 nm from each other.

Generally, single-walled carbon nanotubes, such as the type described in U.S. Patent No. 6,333,016, which is hereby incorporated by reference in its entirety, are preferred. Single-walled carbon nanotubes have been found to be stronger and more absorbent than multi-walled carbon nanotubes. Furthermore, the carbon nanotubes can be combined with palladium powder or metal hydride components to provide adequate hydrogen consumption. The combination of multiple hydrogen absorbing technologies may make the composition more effective under a wider range of conditions because the different technologies for hydrogen absorption operate differently.

In fact, carbon nanotubes introduced into the synthetic matrix of composition 130 have been found to store up to 8% by weight of hydrogen at room temperature and moderate pressure (i.e., atmospheric). This corresponds to a hydrogen absorption capacity of 2 milliMoles/gram, if about 5% carbon nanotubes by weight were incorporated into composition 130. Preferably, the absorption capacity ranges from about 0.1 to about 2 mmol of hydrogen/gm of carbon nanotubes, and the composition contains between about 0.25 and about 5 weight percent carbon nanotubes.

The Examples which follow provide a better understanding of the scope of the invention, but are not limiting thereto.

**Example**

A hydrogen absorbing composition in accordance with the invention was prepared and introduced into a sewer cable. The composition contained a synthetic oil, a thixotropic or pseudoplasticity agent, a thermal oxidative stabilizer and a hydrogen absorbent component. Particularly, the hydrogen absorbent component was in the form of carbon nanotubes and was present in an amount to 5 percent by weight of the composition.

The hydrogen generation under atmospheric conditions was calculated and the absorption capability of the composition was measured in the following manner:

| Calculation for limits of Hydrogen Generation Composition of Standard Atmosphere from CRC Handbook* | | |
|---|---|---|
| **Element** | **Mole Fraction** | **Molecular Weight** |
| Nitrogen | 77.012 | 14.0067 |
| Oxygen | 20.66 | 31.998 |
| Water Vapor** | 1.38 | 20.031 |
| Argon | 0.92 | 39.94 |
| Carbon Dioxide | 0.03 | 44.01 |
| . | | |
| . | | |
| . | | |
| Hydrogen | $5 \times 10^{-5}$ | 2.016 |

\* Adjusted for 50% relative humidity

\*\* At 23°C and 50% relative humidity

$$\text{Density} = 1.225 \text{g/m}^3 / 16 \text{g/mol} = 76 \text{mol m}^{-3}$$

$$76 \text{mol m}^{-3} / (100 \text{ cm/m})^3 = 7.65 \times 10^{-5} \text{mol/cc}$$

Assuming the cross section of the cable (i.e., inside diameter) to be roughly 1 cm, the approximate cable volume is 1cm x 1m =100cc/m, then the cable is filled with $7.65 \times 10^{-3}$ moles of air at one atmosphere of pressure (i.e., $7.65 \times 10^{-5}$ mol/cc x 100cc/m). Thus, 1% of hydrogen in the air-filled cable is $7.65 \times 10^{-5}$ mols/m (or, 8 mmols of gas molecules).

The sewer cable contained about 8.5g of a gel composition per meter of cable. The cable had a 1.7 mm inside diameter and a fiber bundle disposed therein, where the diameter of the bundle was 0.93 mm. The volume of gel/m was calculated as follows:

$$\text{Gel area of 1 tube: } \pi/4(1.7^2 - 0.93^2) = 1.591\text{mm}^2 = 0.01591\text{cm}^2$$

$$\text{Volume of 6 tubes/m} = 0.01591\ \text{cm}^2 \times 6 \text{ tubes} \times 100\text{cm/m} = 9.54\text{cc}.$$

$$\text{Mass of gel} = 9.54\text{cc} \times 0.89\text{g/cc} = 8.5\text{g}$$

The hydrogen absorption of the gel is 2 mmol/g. Thus, it has been found that the composition of the present invention, when utilized in a sewer cable absorbs 17mmol of hydrogen/meter (i.e., 8.5g x 2mmol/g), which amounts to about two atmospheres of hydrogen pressure.

## Comparative Example 1

A cable filling material of the prior art, which includes about 1% of palladium on charcoal powder was inserted into sewer cables under the same test conditions as described above. The hydrogen absorption provided by such a gel is about 0.00038 milliMole/gram. The palladium powder absorbs less than 0.1 millimole of hydrogen/gram of filling material. Therefore, when 8.5 grams of gel per meter of cable is utilized, $3.2 \times 10^{-3}$ mmol of hydrogen are absorbed. This corresponds to < 0.1% of one atmosphere of hydrogen pressure.

## Comparative Example 2

This cable filling material, including about 3% of silver-exchanged zeolites in the synthetic matrix, was found to absorb less than 0.00008 milliMole/gram of gel. A composition of gel including approximately 92% polyolefin gel, 5% pyrogenic silica, and 3% powdered silver-exchanged zeolites was inserted into sewer cables under the same conditions, as described above. Clearly, the hydrogen absorbent materials of the prior art are inferior in hydrogen absorption composition to the present invention.

## Comparative Example 3

A cable filling material of the prior art, which includes about 1% of palladium powder was inserted into sewer cables under the same test conditions as described above. The hydrogen absorption provided by such a gel was about 0.0005 milliMole/gram, wherein the palladium powder absorbs less than 0.1milliMole/gram. Therefore, when 8.5 grams of gel per meter of cable is utilized, $4.25 \times 10^{-3}$ mmol of hydrogen are absorbed. This corresponds to < 0.1% of one atmosphere of hydrogen pressure.

While the invention has been described in detail with reference to specific embodiments thereof, it will be apparent to one skilled in the art that various changes and modifications can be made, and equivalents employed, without departing from the scope of the appended claims.

## Claims

1.  An optical fiber telecommunication cable, comprising:

    a sheath enclosing at least one optical fiber; and
    a hydrogen absorbing composition disposed between said sheath and said at least one optical fiber, wherein said hydrogen absorbing composition comprises a synthetic oil, a thixotropic agent, a thermal oxidation system, and a carbon nanostructure component; wherein said carbon nanostructure component is hydrogen absorbent.

2.  The optical fiber telecommunication cable of Claim 1, wherein said carbon nanostructure component is selected from the group consisting of carbon nanotubes, carbon fibrils, carbon nanoshells, and carbon nanofibers.

3.  The optical fiber telecommunication cable of Claim 2, wherein said hydrogen absorbing composition contains about 5 weight percent carbon nanotubes.

4. The optical fiber telecommunication cable of Claim 2, wherein said carbon naontubes absorb between about 0.1 and about 2mmol of hydrogen/gm of carbon nanotubes.

5. The optical fiber telecommunication cable of Claim 1, wherein said hydrogen absorbent composition further includes metal hydrides.

6. The optical fiber telecommunication cable of Claim 1, wherein said synthetic oil is a polyolefin oil selected from the group consisting of polyalphaolefin, polyglycol, polybutylene, polyisobutylene, silicon oils and mixtures thereof.

7. The optical fiber telecommunication cable of Claim 6, wherein said polyolefin oil is a polyalphaolefin selected from the group consisting of polybutene, poly-n-decene, poly-n-hexene, poly-n-octene, and fractionated mineral oil.

8. The optical fiber telecommunication cable of Claim 1, wherein said thixotropic agent is an inorganic fumed silica modifier.

9. The optical fiber telecommunication cable of Claim 1, wherein said thixotropic agent is a polymeric modifier selected from the group consisting of rubber, styrene-rubber-styrene and styrene-ethylene-propylene copolymer.

10. An optical fiber telecommunication cable, comprising:

   a sheath enclosing at least one buffer tube made from a polyolefin material;
   a bundle of optical fibers disposed in said at least one buffer tube;
   a hydrogen absorbing composition disposed in said buffer tube between said bundle of optical fibers and said buffer tube, where said hydrogen absorbing composition comprises a synthetic oil, a thixotropic agent, an antioxidant system and a carbon nanostructure component, wherein said carbon nanostructure component is hydrogen absorbent.

11. The optical fiber telecommunication cable of Claim 10, wherein
   said hydrogen absorbing composition is disposed between said at least one buffer tube and said sheath.

12. The optical fiber telecommunication cable of Claim 10, wherein said hydrogen absorbing composition is disposed between individual optical fibers in said bundle and said at least one buffer tube.

13. The optical fiber telecommunication cable of Claim 10, wherein said carbon nanostructure component is selected from the group consisting of carbon nanotubes, carbon fibrils, carbon nanoshells and carbon nanofibers.

14. The optical fiber telecommunication cable of Claim 13, wherein said hydrogen absorbing composition contains between about 0.25 and about 5 weight percent carbon nanotubes.

15. The optical fiber telecommunication cable of Claim 13, wherein said carbon naontubes absorb about 2 mmol of hydrogen/gm of carbon nanotubes.

16. A hydrogen absorbing composition, comprising:

   a synthetic oil, a thixotropic agent, a thermal oxidation system and at least one hydrogen absorbent component, wherein said hydrogen absorbent component has a carbon nanostructure.

17. The hydrogen absorbing composition of Claim 21, wherein said carbon nanostructure component is selected from the group consisting of carbon nanotubes, carbon fibrils, carbon nanoshells and carbon nanofibers.

18. The hydrogen absorbing gel composition of Claim 22, wherein said carbon nanotubes are present in an amount of about five percent by weight of said composition.

FIG. 1

FIG. 2

FIG. 3